(19) **Europäisches Patentamt**
**European Patent Office**
**Office européen des brevets**

(11) Veröffentlichungsnummer: **0 274 981 B1**

(12) # EUROPÄISCHE PATENTSCHRIFT

(45) Veröffentlichungstag der Patentschrift:
13.03.91 Patentblatt 91/11

(51) Int. Cl.$^5$: **B60C 27/06**

(21) Anmeldenummer: **87730167.1**

(22) Anmeldetag: **16.12.87**

(54) **Gleitschutzkette für Fahrzeugreifen.**

(30) Priorität: **17.12.86 DE 3643652**

(43) Veröffentlichungstag der Anmeldung:
**20.07.88 Patentblatt 88/29**

(45) Bekanntmachung des Hinweises auf die
Patenterteilung:
**13.03.91 Patentblatt 91/11**

(84) Benannte Vertragsstaaten:
**AT CH DE IT LI**

(56) Entgegenhaltungen:
**DE-A- 3 209 992**
**DE-A- 3 311 962**
**DE-U- 8 102 386**
**DE-U- 8 313 699**

(73) Patentinhaber: **RUD-Kettenfabrik Rieger &
Dietz GmbH u. Co.
Friedensinsel
W-7080 Aalen 1 (DE)**

(72) Erfinder: **Holzwarth, Dietmar Helmut
Vogelhofstrasse 51
W-7070 Schwäbisch Gmünd (DE)**

(74) Vertreter: **Böning, Manfred, Dr. Ing. et al
Patentanwälte Dipl.-Ing. Dieter Jander Dr. Ing.
Manfred Böning Leistikowstrasse 2
W-1000 Berlin 19 (DE)**

## Beschreibung

Die Erfindung betrifft eine Gleitschutzkette für Fahrzeugreifen mit einer inneren Halterung und einer mindestens eine durch einen Spannstrang über- brückte Teilungsstelle aufweisenden äußeren Halte- rung sowie zwischen den beiden Halterungen angeordneten Laufnetzelementen mit schräg zur Laufrichtung orientierten Kettenstrangabschnitten, bei der die Teilungsstelle der äußeren Halterung zwischen den Angriffspunkten zweier in Laufrichtung aufeinanderfolgender, schräg zur Laufrichtung orientierter Kettenstrangabschnitte des Laufnetzes angeordnet ist.

Bei einer aus dem DE-U 83 08 930 bekannten Gleitschutzkette der in Betracht gezogenen Art mit einer einen Verschluß aufweisenden, von einem aufspreizbaren Organ gebildeten inneren Halterung verlaufen die schräg zur Laufrichtung orientierten Kettenstränge, zwischen denen die Teilungsstelle liegt, in Richtung auf die äußere Halterung betrachtet, aufeinander zu. Der Spannstrang ist dabei an einem Ende der äußeren Halterung befestigt und durch eine Umlenkung an deren anderem Ende geführt. In Abhängigkeit von den Abmessungen der mit der Gleitschutzkette bestückbaren Reifen ist nicht nur der Abstand zwischen den die Teilungsstelle begrenzenden Enden der äußeren Halterung mehr oder weniger groß, sondern auch der Abstand zwischen den der Teilungsstelle nächstgelegenen Laufnetzelementen. Die Folge ist, daß beim Montieren der Gleitschutzkette auf einen vergleichsweise großen Reifen zwischen zwei aufeinander folgenden Laufnetzelementen eine laufnetzfreie Zone entstehen kann, die unerwünscht groß, d.h. insbesondere größer als die Bodenaufstandsfläche des Reifens ist. Hinzu kommt, daß bei der bekannten Konstruktion der Spannstrang vergleichsweise lang sein muß, um die äußere Halterung während der Montage um einen hinreichend großen Betrag aufweiten zu können. Durch des DE-U-8313699 ist eine gattungsgemäße Kette bekannt, bei der der Spannstrang von einen Spannhilfselement gebildet ist und bei der eine ziesätgliche Schließkette nötig ist.

Der Erfindung liegt die Aufgabe zugrunde, eine Gleitschutzkette der in Betracht gezogenen Art zu schaffen, bei der der Spannstrang so ausgebildet und geführt ist, daß bei einer Montage der Kette auf Reifen eines bestimmten Abmessungsbereiches unabhängig von der Größe des Abstandes zwischen den die Teilungsstelle begrenzenden Endpunkten der äußeren Halterung eine Laufnetzkonfiguration beibehalten werden kann, die die Gewähr dafür bietet, daß sich im Bereich der Bodenaufstandsfläche des Reifens stets Kettenglieder befinden. Diese Aufgabe wird bei einer gattungs gemäßen Kette erfindungsgemäß durch die Kennzeichenenden Merkmale des Anspruches 1 gelöst.

Die erfindungsgemäße Gleitschutzkette bietet den Vorteil, daß ihr Gleitschutzvermögen nicht von der Größe des Abstandes zwischen den Endpunkten der äußeren Halterung im Bereich der Teilungsstelle abhängt und daß der im Bereich der äußeren Halterung zu verwahrende Teil des Spannstranges im Hinblick auf die Nutzung eines Kettenstrangabschnittes des Laufnetzes der Kette zu Spann- bzw. Aufweitzwecken verhältnismäßig kurz sein kann.

Weitere Einzelheiten und Merkmale der Erfindung ergeben sich aus den Unteransprüchen und der nachfolgenden Beschreibung zweier in der beigefügten Zeichnung dargestellter Ausführungsbeispiele. Es zeigen.

Fig. 1 schematisch die Vorderseite eines mit einer Gleitschutzkette bestückten Fahrzeugreifens,

Fig. 2 schematisch die Teilvorderansicht eines mit der in Fig. 1 dargestellten Gleitschutzkette bestückten Fahrzeugreifens, dessen Abmessungen etwas größer sind als die Abmessungen des Reifens gemäß Fig. 1,

Fig. 3 schematisch die Rückseite des Reifens gemäß Fig. 2,

Fig. 4 die Lage des Spannstranges der in den Figuren 2 und 3 dargestellten Gleitschutzkette während der Montage,

Fig. 5 die Lage des Spannstranges der in den Figuren 2 und 3 dargestellten Gleitschutzkette nach der Montage und

Fig. 6 schematisch die Vorderseite eines mit einer modifizierten Gleitschutzkette bestückten Reifens.

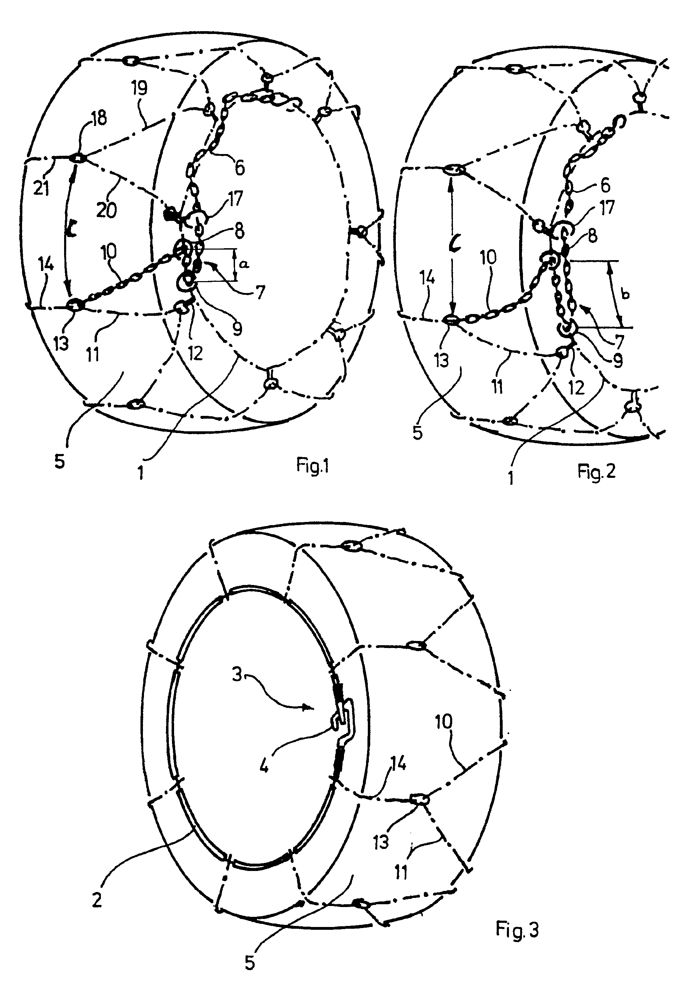

In den Figuren 1-5 ist eine Gleitschutzkette mit im wesentlichen Y-förmigen Laufnetzelementen sowie einer äußeren Halterung 1 und einer inneren Halterung 2 dargestellt. Die innere Halterung 2 wird von einem einstückigen federelastischen Ring gebildet, der im Bereich einer Teilungsstelle 3 mit einem Verschluß 4 versehen ist. Der federelastische Ring wird beim Montieren der Gleitschutzkette aufgespreizt und über den Fahrzeugreifen 5 gestülpt. Sobald er die Lauffläche des Reifens passiert hat, kann er losgelassen werden und danach automatisch wieder in seine geschlossene Form zurückfedern. Der Verschluß 4 hat die Aufgabe, ihn in dieser Form zu halten. Zum Spannen der Gleitschutzkette dienen die äußere Halterung 1 und ein Spannstrang 6. Der Spannstrang 6 überbrückt dabei eine Teilungsstelle 7 der äußeren Halterung 1, die von Umlenkungen 8 und 9 begrenzt wird, welche an den sich gegenüberliegenden Enden der äußeren Halterung 1 befestigt sind.

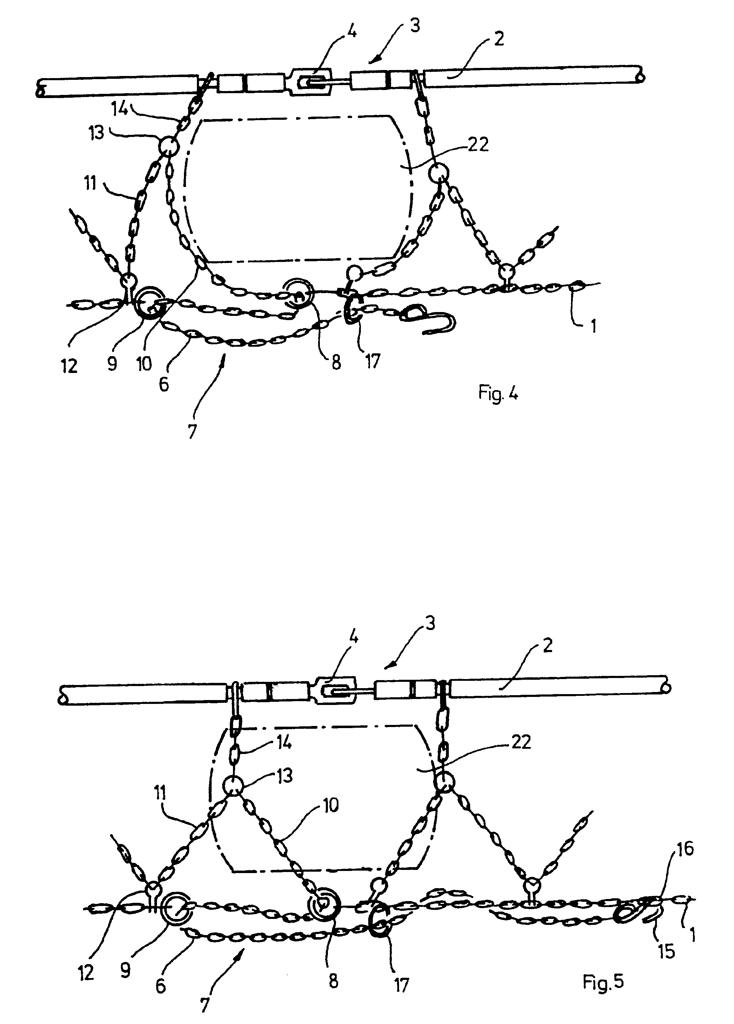

Wie insbesondere die Figuren 4 und 5 zeigen, ist die Teilungsstelle 7 der äußeren Halterung 1 zwischen den Angriffsstellen zweier schräg zur Laufrichtung orientierter Kettenstrangabschnitte 10 und 11 an der äußeren Halterung angeordnet, wobei die Angriffsstelle des Kettenstrangabschnittes 10 an der äußeren Halterung 1 von der Umlenkung 8 und die Angriffsstelle des Kettenstrangabschnittes 11 an der äußeren Halterung 1 von einem sogenannten Seitenhaken 12 gebildet wird. Die der äußeren Halterung 1 abgewandten Enden der Kettenstrangabschnitte 10 und 11 sind in einem Knotenpunkt 13 zusammengeführt, von dem ein Kettenstrangabschnitt 14 zur inneren Halterung 2 verläuft.

Der Kettenstrangabschnitt 10 bildet einen Teil des Spannstranges 6 und erleichtert als eine Art Spannreserve das Aufweiten der äußeren Halterung 1, wie dies aus Fig. 4 erkennbar ist.

Sobald die Kette montiert und gespannt ist, wird ein am Ende des Spannstranges 6 angeordneter Haken 15 in ein Glied 16 der äußeren Halterung 1 eingehängt. Die Abmessungen des Hakens 15 sind vorzugsweise so gewählt, daß der Haken einen den Umlenkungen 8 und 9 nachgeschalteten Führungsring 17 nicht passieren kann. Der Führungsring bildet mit anderen Worten eine Sicherung gegen das Ausrauschen des Spannstranges 6. Es ist möglich, den Führungsring oder eine der Umlenkungen 8 oder 9 als Arretierung für den Spannstrang 6 auszubilden. Dies kann beispielsweise dadurch geschehen, daß man die Öffnung der Umlenkung 8 nicht kreis-, sondern schlüssellochförmig ausgestaltet.

Aufgrund der beschriebenen Anordnung und Führung des Spannstranges wird erreicht, daß der Abstand c zwischen dem Knotenpunkt 13 des der Teilungsstelle 7 zugeordneten Laufnetzelementes 10, 11, 13, 14 vom Knotenpunkt 18 eines weitere Kettenstrangabschnitte 19, 20, 21 aufweisenden Laufnetzelementes gleich bleibt, auch wenn die Abstände zwischen den Umlenkungen 8 und 9 unterschiedliche Werte a und b annehmen (vgl. Fig. 1 u. 2). Es ist auf diese Weise sichergestellt, daß sich im Bereich der Bodenaufstandsfläche 22 stets Gleitschutzelemente befinden, wie dies die Fig. 5 verdeutlicht. Die Konfiguration des Laufnetzes der beschriebenen Gleitschutzkette erfährt mit anderen Worten im Bereich der gegeneinander versetzt angeordneten Teilungsstellen 3 und 7 der inneren und äußeren Halterung 2, 1 keine Beeinträchtigung.

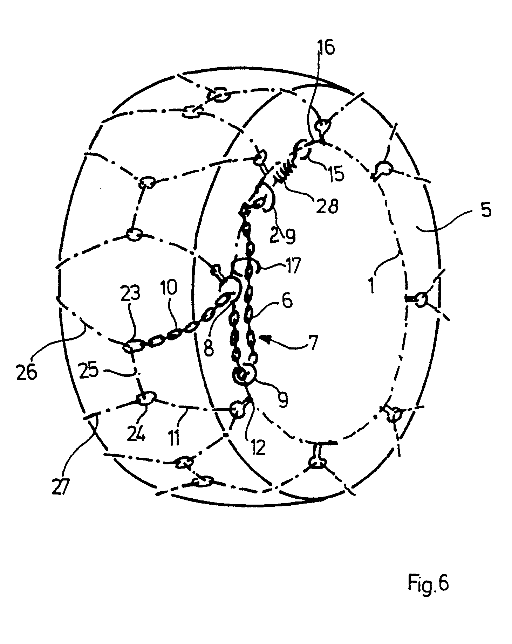

Die Fig. 6 zeigt eine Gleitschutzkette mit einer modifizierten Netzkonfiguration. Während bei dem zuerst beschriebenen, besonders vorteilhaften Ausführungsbeispiel Y-förmige Laufnetzelemente verwendet werden, gelangen bei der Gleitschutzkette gemäß Fig. 6 doppeltrapezförmige Gleitschutzelemente zur Anwendung. Die Kettenstrangabschnitte 10 und 11 laufen hier folglich nicht zu einem gemeinsamen Knotenpunkt zusammen, sondern sie enden im Bereich der Lauffläche an Knotenpunkten 23 und 24, die durch ein Spurstück 25 miteinander und über weitere Kettenstrangabschnitte 26, 27 mit der inneren Halterung 2 verbunden sind. Im übrigen entspricht der Aufbau der zweiten Gleitschutzkette weitgehend dem Aufbau der Gleitschutzkette gemäß den Figuren 1-5. Für einander entsprechende Teile wurden daher die gleichen Bezugszeichen verwendet. In Abweichung vom ersten Ausführungsbeispiel ist im Bereich des Endes des Spannstranges 6 beim zweiten Ausführungsbeispiel eine Spannfeder 28 angeordnet, und zwar zwischen dem Haken 15 und einem Anschlagring 29, dessen Außenabmessungen größer sind als die Innenabmessungen des Führungsringes 17.

Die vorstehenden Darlegungen lassen erkennen, daß die beschriebene Lage der Teilungsstelle 7 der äußeren Halterung 1 zwischen den in Richtung auf die äußere Halterung 1 auseinanderlaufenden Kettenstrangabschnitten 10 und 11 sowie die Einbeziehung des Kettenstrangabschnittes 10 in den Spannstrang 6 die Gewähr für eine homogene Laufnetzkonfiguration der Gleitschutzkette bietet.

## Ansprüche

1. Gleitschutzkette für Fahrzeugreifen mit einer eine Teilungsstelle aufweisenden inneren Halterung (2) und einer eine Teilungsstelle aufweisenden äußeren Halterung (1) sowie zwischen den beiden Halterungen (1, 2) angeordneten Laufnetzelementen mit schräg zur Laufrichtung orientierten Kettenstrangabschnitten,, bei der die innere Halterung (2) von einem aufspreizbaren Organ gebildet wird, das im Bereich seiner Teilungsstelle (3) mit einem Verschluß (4) versehen ist, und bei der die äußere Halterung (1) an ihrer zwischen den Angriffspunkten (8, 12) zweier in Laufrichtung aufeinanderfolgender, schräg zur Laufrichtung orientierter Kettenstrangabschnitte (10, 11) des Laufnetzes gelegenen Teilungsstelle (7) durch einen Spannstrang (6) überbrückt wird, mit dessen Hilfe ihr Umfang verkürzbar und auf diese Weise die Kette in ihrer Gesamtheit spannbar ist, wobei der Spannstrang (6) unter jeweiligem Richtungswechsel durch zwei die Teilungsstelle (7) im Bereich der äußeren Halterung (1) begrenzende Umlenkungen (8, 9) geführt ist, dadurch gekennzeichnet, daß die Teilungsstellen (3, 7) der inneren Halterung (2) und der äußeren Halterung (1) in Umfangsrichtung zueinander versetzt in benachbarten Feldern des Laufnetzes angeordnet sind, daß die zwei zu iren beidseits der Teilungsstelle (7) der äußeren Halterung (1) liegenden Angriffspunkten (8, 12) verlaufenden Kettenstrangabschnitte (10, 11), in Richtung auf die äußere Halterung (1) betrachtet, auseinanderlaufen, und daß einer (10) dieser beiden Kettenstrangabschnitte (10, 11) zu den beiden benachbarten Feldern des Laufnetzes gehört und einen Teil des Spannstranges (6) bildet.

2. Gleitschutzkette nach Anspruch 1, dadurch gekennzeichnet, daß die der äußeren Halterung (1) abgewandten Enden der der Teilungsstelle (7) benachbarten Kettenstrangabschnitte (10, 11) zu mindestens einem Knotenpunkt (13 ; 23, 24) des Laufnetzes verlaufen.

3. Gleitschutzkette nach Anspruch 2, dadurch gekennzeichnet, daß die Kettenstrangabschnitte (10, 11) zu einem gemeinsamen Knotenpunkt (13) verlaufen, an den nur ein weiterer Kettenstrangabschnitt (14) angreift, der den Knotenpunkt (13) mit der inneren Halterung (2) verbindet.

4. Gleitschutzkette nach Anspruch 2, dadurch gekennzeichnet, daß die Kettenstrangabschnitte (10, 11) zu getrennten Knotenpunkten (23, 24) verlaufen, die über ein Spurstück (25) miteinander und über weitere Kettenstrangabschnitte (26, 27) mit der inneren Halterung (2) verbunden sind.

5. Gleitschutzkette nach einem der Ansprüche 1 bis 4, dadurch gekennzeichnet, daß der Spannstrang (6) nach dem Passieren der Umlenkungen (8, 9) einen Führungsring (17) durchläuft.

6. Gleitschutzkette nach Anspruch 5, dadurch gekennzeichnet, daß der Führungsring (17) in unmittelbarer Nähe der ersten vom Spannstrang (6) passierten Umlenkung (8) an der äußeren Halterung (1) befestigt ist.

7. Gleitschutzkette nach Anspruch 5 oder 6, dadurch gekennzeichnet, daß der Führungsring (17) eine Ausrauschsicherung für den Spannstrang (6) bildet.

8. Gleitschutzkette nach einem der Ansprüche 1 bis 7, dadurch gekennzeichnet, daß der Spannstrang (6) mit einer Spannfeder (28) versehen ist.

9. Gleitschutzkette nach einem der Ansprüche 1 bis 7, dadurch gekennzeichnet, daß eine der Umlenkungen (8, 9) oder der Führungsring (17) als Spannstrangarretierung ausgebildet ist.

10. Gleitschutzkette nach einem der Ansprüche 1 bis 9, dadurch gekennzeichnet, daß die innere Halterung (2) von einem aus einer geschlossenen Form aufspreizbaren und bei Wegfall der Spreizkräfte selbständig in die geschlossene Form zurückkehrenden federelastischen Ring gebildet wird.

11. Gleitschutzkette nach einem der Ansprüche 1 bis 10, dadurch gekennzeichnet, daß der Spannstrang (6) an der Teilungsstelle (7) mindestens einen zweifachen Richtungswechsel ausführt.

## Claims

1. Antislip chain for vehicle tyres, comprising an inner holder (2) having a dividing location, and an outer holder (1) having a dividing location, and also running-net elements which are arranged between the two holders (1, 2) and have chain-strand sections orientated at an angle to the running direction, in which antislip chain the inner holder (2) is formed by an expandable member which is provided with a fastener (4) in the area of its dividing location (3), and in which the outer holder (1) is bridged by a tension strand (6) at its dividing location (7) situated between the points (8, 12) of application of two chain-strand sections (10, 11) of the running net which follow one another in the running direction and are orientated at an angle to the running direction, by means of which tension strand (6) the periphery of the outer holder (1) can be shortened and in this way the chain in its entirety can be tensioned, the tension strand (6), with a respective change of direction, being guided by two deflection means (8, 9) defining the dividing location (7) in the area of the outer holder (1), characterized in that the dividing locations (3, 7) of the inner holder (2) and of the outer holder (1) are arranged so as to be offset relative to one another in the peripheral direction in adjacent zones of the running net, in that the two chain-strand sections (10, 11) running towards their points (8, 12) of application lying on either side of the dividing location (7) of the outer holder (1) diverge as viewed in the direction of the outer holder (1), and in that one (10) of these two chain-strand sections (10, 11) belongs to the two adjacent zones of the running net and forms a part of the tension strand (6).

2. Antislip chain according to Claim 1, characterized in that the ends, remote from the outer holder (1), of the chain-strand sections (10, 11) adjacent to the dividing location (7) run to at least one nodal point (13 ; 23, 24) of the running net.

3. Antislip chain according to Claim 2, characterized in that the chain-strand sections (10, 11) run to a common nodal point (13) on which only one further chain-strand section (14), which connects the nodal point (13) to the inner holder (2), acts.

4. Antislip chain according to Claim 2, characterized in that the chain-strand sections (10, 11) run to separate nodal points (23, 24) which are connected to one another via a track piece (25) and to the inner holder (2) via further chain-strand sections (26, 27).

5. Antislip chain according to one of Claims 1 to 4, characterized in that the tension strand (6) runs through a guide ring (17) after passing the deflection means (8, 9).

6. Antislip chain according to Claim 5, characterized in that the guide ring (17) is fixed to the outer holder (1) in direct proximity to the first deflection means (8) passed by the tension strand (6).

7. Antislip chain according to Claim 5 or 6, characterized in that the guide ring (17) forms a restraint against rapid escape of the tension strand (6).

8. Antislip chain according to one of Claims 1 to 7, characterized in that the tension strand (6) is provided with a tension spring (28).

9. Antislip chain according to one of Claims 1 to 7, characterized in that one of the deflection means (8, 9) or the guide ring (17) is designed as a tension-strand locking device.

10. Antislip chain according to one of Claims 1 to 9, characterized in that the inner holder (2) is formed by a spring-elastic ring which can be expanded from a closed shape and returns automatically into the closed shape when the expanding forces cease.

11. Antislip chain according to one of Claims 1 to 10, characterized in that the tension strand (6) changes direction at least twice at the dividing location (7).

## Revendications

1. Chaîne antidérapante pour pneus de véhicule comportant une attache intérieure (2) présentant un emplacement de séparation et une attache extérieure (1) présentant un emplacement de séparation ainsi que des éléments de réseau de roulement qui sont disposés entre les deux attaches (1, 2) et comportent des sections de chaîne orientées obliquement par rapport à la direction du roulement, dans laquelle l'attache intérieure (2) est constituée d'un organe pouvant s'ouvrir et muni d'une fermeture (4) dans la zone de son emplacement de séparation (3) et dans laquelle l'attache extérieure (1) est refermée à son emplacement de séparation (7), qui est disposé entre les points d'accrochage (8, 12) de deux tronçons de chaîne (10, 11) disposés successivement selon la direction du roulement et orientés obliquement par rapport à la direction du roulement, par un cordon de tension (6) à l'aide duquel le périmètre de l'attache extérieure peut être raccourci et, de cette manière, la chaîne peut être tendue dans sa totalité, le cordon de tension (6) étant guidé pour chaque changement de direction au moyen de deux articulations (8, 9) délimitant l'emplacement de séparation (7) dans la zone de l'attache extérieure (1), caractérisée en ce que les emplacements de séparation (3, 7) de l'attache intérieure (2) et de l'attache extérieure (1) sont disposés de manière à être décalés l'un par rapport à l'autre dans la direction périphérique dans des zones voisines du réseau de roulement, en ce que les deux tronçons de chaîne (10, 11) allant aux points d'accrochage (8, 12) se trouvant des deux côtés de l'emplacement de séparation de l'attache extérieure (1) s'étendent de manière divergente en direction de l'attache extérieure (1) et en ce que l'un (10) de ces deux tronçons de chaîne (10, 11) appartient aux deux zones voisines du réseau de roulement et constitue une partie du cordon de tension (6).

2. Chaîne antidérapante selon la revendication 1, caractérisée en ce que les extrémités opposées à l'attache extérieure (1) des tronçons de chaîne (10, 11) voisins de l'emplacement de séparation (7) s'étendent jusqu'au moins un point nodal (13 ; 23, 24) du réseau de roulement.

3. Chaîne antidérapante selon la revendication 2, caractérisée en ce que les tronçons de chaîne (10, 11) s'étendent jusqu'à un point nodal (13) commun auquel ne se raccroche qu'un seul autre tronçon de chaîne (14) qui relie le point nodal (13) à l'attache intérieure (2).

4. Chaîne antidérapante selon la revendication 2, caractérisée en ce que les tronçons de chaîne (10, 11) s'étendent jusqu'à des points nodaux séparés (23, 24) qui sont reliés entre eux par l'intermédiaire d'une pièce de voie (25) et à l'attache intérieure (2) par l'intermédiaire d'autres tronçons de chaîne (26, 27).

5. Chaîne antidérapante selon l'une des revendications 1 à 4, caractérisée en ce que le cordon de tension (6) traverse un anneau de guidage (17) après être passé dans les articulations (8, 9).

6. Chaîne antidérapante selon la revendication 5, caractérisée en ce que l'anneau de guidage (17) est fixé sur l'attache extérieure (1) à proximité immédiate de la première articulation (8) traversée par le cordon de tension (6).

7. Chaîne antidérapante selon l'une des revendication 5 ou 6, caractérisée en ce que l'anneau de guidage (17) constitue une sécurité contre l'échappement par glissement pour le cordon de tension (6).

8. Chaîne antidérapante selon l'une des revendications 1 à 7, caractérisée en ce que le cordon de tension (6) est muni d'un ressort de tension (28).

9. Chaîne antidérapante selon l'une des revendications 1 à 7, caractérisée en ce qu'une des articulations (8 ou 9) ou l'anneau de guidage (17) est constitué sous la forme d'un blocage du cordon de tension.

10. Chaîne antidérapante selon l'une des revendications 1 à 9, caractérisée en ce que l'attache intérieure (2) est constituée d'un anneau déformable pouvant être ouvert à partir d'une forme fermée et retournant de lui même dans la forme fermée lorsque l'on supprime les forces d'extension.

11. Chaîne antidérapante selon l'une des revendications 1 à 10, caractérisée en ce que le cordon de tension (6) réalise, à l'emplacement de séparation (7), au moins un double changement de direction.

Fig.1

Fig. 2

Fig. 3

Fig. 4

Fig. 5

Fig.6